# DEMANDE DE BREVET EUROPEEN

(11) **EP 1 767 397 A2**
(43) Date de publication de la demande: **28.03.2007**
(21) Numéro de dépôt: 06300916.1
(22) Date de dépôt: 01.09.2006
(51) Int. Cl.: B60N 2/427

(54) **Système de protection choc latéral par inclinaison**

(30) Priorité: 26.09.2005 FR 0509807
(71) Demandeur: Renault, 92109 Boulogne Billancourt (FR)
(72) Inventeur: Henaux, Jean Marc, 91440, Bures sur Yvette (FR); Makala, Jérôme, 78280, Guyancourt (FR)

(57) **Abrégé**

Le siège de véhicule comprend au moins deux poussoirs parmi les poussoirs suivants aptes à déplacer un occupant (3) du siège
- un poussoir latéral (22) associé à un côté externe du siège ;
- un poussoir latéral (24) associé à un côté interne du siège ; et
- un poussoir d'antisoumarinage.

## Description

L'invention concerne la protection des passagers des véhicules automobiles.

Plusieurs pistes sont envisageables pour améliorer la protection des passagers.

On peut chercher à améliorer la détection du choc pour déclencher les coussins gonflables plus tôt. Pour cela il faut améliorer les capteurs et les algorithmes de traitement. Les gains espérés sont cependant limités dès lors que l'on souhaite protéger l'occupant pour des vitesses d'impact bien supérieures à celles auxquelles on le protège aujourd'hui. Une autre voie d'étude concerne l'anticipation d'un impact latéral où, par un mode de détection approprié, il serait possible d'anticiper le choc ou de déclencher les coussins gonflables avant ce dernier. L'anticipation d'un crash peut contribuer fortement à la mise en place d'un coussin gonflable plus gros, les gains en millisecondes permettant de faire des gains en millimètres dans l'habitacle, ce qui assurerait une protection de l'occupant même à des vitesses d'impact véhicule contre véhicule supérieures à 60 kilomètres / heure.

Une autre piste consiste à améliorer le temps d'activation et de mise en place du coussin gonflable. Mais cette solution est limitée à la technologie même de ces coussins. Les gains pour pouvoir protéger l'occupant à des vitesses d'impact supérieures à celles utilisées aujourd'hui pour dimensionner les systèmes de protection ne seraient pas suffisants.

On peut chercher aussi à désencombrer l'espace entre l'intérieur du véhicule et l'occupant. Toutefois l'espace disponible résulte de compromis entre l'habitabilité et la sécurité. Le gain d'espace entre les différentes pièces intérieures (porte, pied milieu, poste de conduite,...) et l'occupant atteint aujourd'hui ses limites.

Une solution privilégiée est de prendre en charge l'occupant avant le choc. Il s'agit ainsi de mettre en vitesse l'occupant avant l'impact. En effet, en agissant sur le bassin du passager de façon oblique pour le pousser vers l'intérieur du véhicule, on rend possible d'intercaler des coussins gonflables latéraux plus volumineux. Les documents JP-2003-23 75 22 et DE-199 46 406 présentent à cette fin un siège de véhicule muni côté externe, c'est-à-dire le côté le plus proche de la carrosserie du véhicule, d'un poussoir permettant de déplacer par pivotement le passager vers l'intérieur du véhicule en cas de choc latéral.

Un but de l'invention est d'améliorer encore la sécurité des passagers lors des chocs latéraux.

A cet effet, on prévoit selon l'invention un siège comprenant au moins deux poussoirs parmi les poussoirs suivants aptes à déplacer un occupant du siège :
- un poussoir latéral associé à un côté externe du siège ;
- un poussoir latéral associé à un côté interne du siège ; et
- un poussoir d'antisoumarinage.

Le siège selon l'invention pourra présenter en outre au moins l'une quelconque des caractéristiques suivantes :
- il comprend les trois poussoirs ;
- il comprend un organe de commande agencé pour commander le déplacement de l'occupant au moyen de l'un au moins des poussoirs ;
- l'organe de commande est agencé pour commander le déplacement de l'occupant au moyen :
   - de l'un seulement des poussoirs ; ou
   - de deux des poussoirs ou des deux poussoirs ; en fonction d'au moins une caractéristique d'un événement concernant le véhicule ;
- l'organe de commande est agencé pour commander le déplacement de l'occupant au moyen simultanément du poussoir d'antisoumarinage et du poussoir latéral ou de l'un des poussoirs latéraux ;
- l'organe de commande est agencé pour commander le déplacement de l'occupant au moyen successivement de deux des poussoirs ou des deux poussoirs ;
- il comprend un dispositif comportant au moins deux des poussoirs ;
- il comprend un dispositif comportant les trois poussoirs.

On prévoit également selon l'invention un véhicule comprenant au moins un siège parmi un siège de conducteur, un siège de passager avant et un siège arrière conforme à l'une quelconque des revendications précédentes.

On prévoit enfin selon l'invention un procédé dans lequel on déplace le passager sur son siège par rapport au reste du véhicule au moyen de deux poussoirs au moins parmi les suivants :
- un poussoir latéral associé à un côté externe du siège ;
- un poussoir latéral associé à un côté interne du siège ; et
- un poussoir d'antisoumarinage.

D'autres caractéristiques et avantages de l'invention apparaîtront encore dans la description suivante d'un mode préféré de réalisation et d'une variante données à titre d'exemples non limitatifs en référence aux dessins annexés sur lesquels :

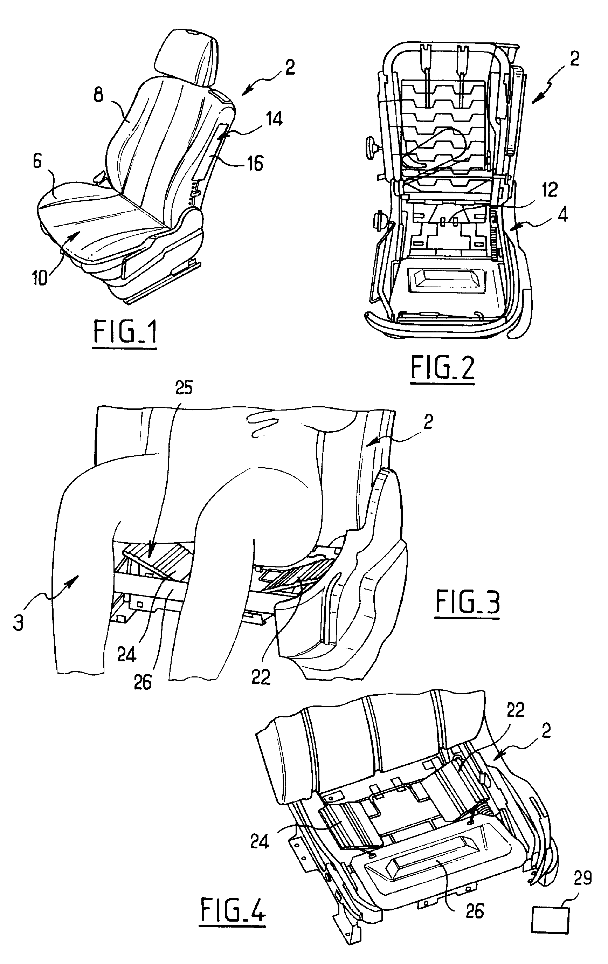

- les figures 1 et 2 sont des vues en perspective montrant l'architecture générale d'un siège selon un mode préféré de réalisation de l'invention, respectivement avec et sans les matelassures ;
- la figure 3 d'une vue en perspective partielle illustrant le siège de la figure 1 avec un mannequin et montrant la position des différents poussoirs ;
- la figure 4 est une vue analogue à la figure 3 ;
- la figure 5 illustre le siège de la figure 4 vue de côté au niveau de l'assise ;
- les figures 6, 7 et 8 montrent les différentes étapes de fonctionnement du poussoir externe dans le siège de la figure 1 ;
- les figures 9, 10 et 11 sont trois vues en perspective des passagers avant du véhicule selon l'invention occupant des sièges conformes à la figure 1 respectivement dans le cas d'un choc frontal, d'un choc latéral gauche et d'un choc latéral droit ;
- la figure 12 est une vue en plan du siège de la figure 1 montrant le déclenchement de deux des poussoirs à la suite de chocs combinés ;
- les figures 13 et 14 sont deux vues respectivement en perspective et en plan d'une pièce en « U » utilisée dans le siège de la figure 1 ;
- les figures 15 et 16 sont des vues en perspective montrant l'intégration du générateur dans la pièce de la figure 13 ;
- les figures 17 à 20 montrent différentes configurations de déploiement de la pièce de la figure 13 ;
- les figures 21 et 22 sont des vues en coupe suivant un plan vertical transversal à la direction de marche du véhicule illustrant une variante de réalisation du siège de la figure 1 ;
- la figure 23 est une vue analogue à la figure 21 montrant le fonctionnement du poussoir latéral externe.

Dans le véhicule selon un mode préféré de réalisation de l'invention que nous allons décrire, le siège conducteur, le siège avant passager et éventuellement au moins l'un des sièges arrières sont réalisés conformément à l'invention c'est-à-dire avec deux ou trois poussoirs comme on va le voir.

On a ainsi illustré à la figure 2 le siège conducteur ou le siège passager 2, ces deux sièges étant a priori identiques. Le siège 2 comprend une armature de siège 4 recouverte par des matelassures d'assise 6 et de dossier 8. Le siège comprend dans l'assise 10 une nappe ressort 12. Il est pourvu de mécanismes de réglage 14 de la position longitudinale du siège par rapport à un plancher du véhicule non représenté. Il est également pourvu de façon non illustrée de mécanismes de réglage de l'inclinaison du dossier 14.

Le siège comprend du côté externe c'est-à-dire du côté le plus proche de la carrosserie du véhicule, au niveau du dossier 14, un coussin gonflable latéral 16 logé dans le dossier. Cet coussin est apte à se déployer en cas de choc latéral provenant de la gauche de l'occupant du siège, dans le cas du siège conducteur.

Le siège comprend deux poussoirs latéraux 22 et 24 logés dans l'assise 10 et associés respectivement aux côtés externe et interne du siège. Le côté externe est le côté le plus proche de la carrosserie du véhicule tandis que le côté interne est celui le plus proche de l'autre siège ou encore du plan longitudinal vertical médian du véhicule (les poussoirs internes 24 des deux sièges avant sont donc proches l'un de l'autre). Les deux poussoirs 22 et 24 sont logés à mi-distance des bords avant et arrière de l'assise, et respectivement dans les moitiés gauche et droite de cette dernière, à proximité des bords respectifs externe et interne.

Chaque poussoir présente à l'état non actif une face supérieure 25 essentiellement plane. Les deux faces 25 sont inclinées l'une par rapport à l'autre en direction l'une de l'autre pour épouser la forme de cuvette de l'assise.

Le siège comprend en outre un poussoir d'antisoumarinage 26. Ce poussoir est situé sous l'assise en partie avant de l'assise à proximité de son bord avant. Ce poussoir 26 est destiné à éviter le sous marinage du passager lors d'un choc frontal du véhicule. Il vise ainsi à former un obstacle pour le mouvement vers l'avant et vers le bas du bassin.

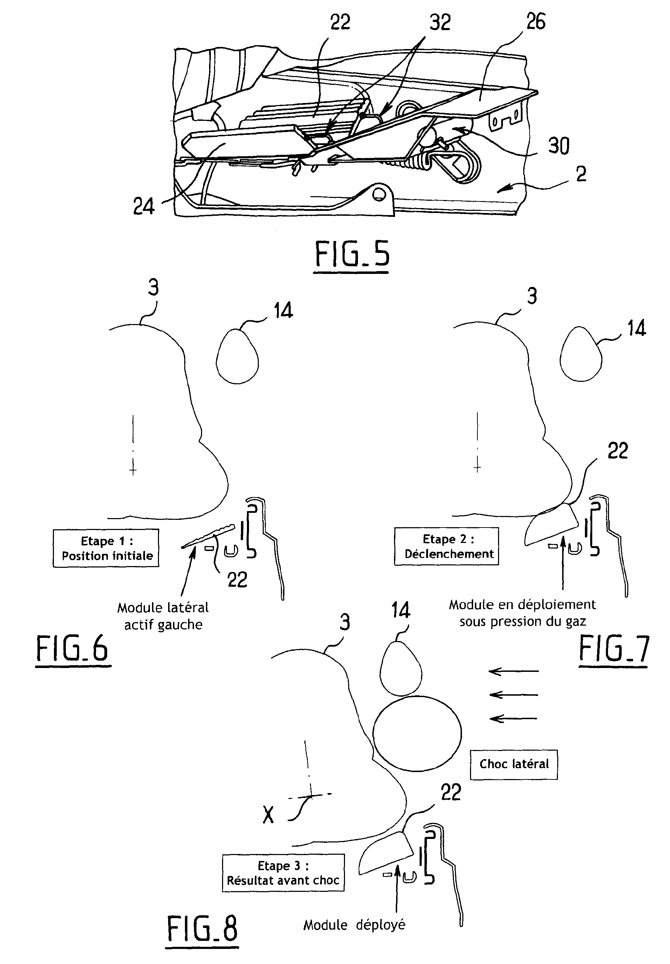

Le siège comprend également un générateur de gaz 30 à trois chambres associées respectivement aux trois poussoirs 22, 24 et 26, illustré à la figure 5.

Le véhicule, et par exemple le siège, comprend également au moins un capteur de détection de choc frontal et des capteurs de détection de chocs latéraux gauche et droit. Le véhicule comprend un calculateur 29 relié à ces capteurs et agencé pour commander le déclenchement du générateur 30 afin qu'il produise du gaz destiné sélectivement à un, deux ou trois des poussoirs comme on le verra dans la suite. Précisément, le calculateur reçoit les informations des différents capteurs afin de donner les ordres de déclenchement des poussoirs selon la nature du choc, par exemple frontal ou latéral. Lorsque l'un des poussoirs est déclenché, il se gonfle sous l'effet du gaz afin de provoquer un déplacement prédéterminé du corps du passager 3 préalablement au choc. Les trois poussoirs 22, 24 et 26 sont donc destinés à mettre en vitesse le bassin du passager.

Le générateur 30 pourra être logé en étant adjacent au poussoir 26 d'antisoumarinage et en étant relié par des diffuseurs tubulaires 32 illustrés à la figure 5 aux poussoirs latéraux respectifs 22 et 24 afin d'acheminer jusqu'à eux le gaz nécessaire.

L'invention vise une protection efficace de l'occupant en positionnant au plus proche de ce dernier les différents poussoirs. Les trois poussoirs s'intègrent complètement dans l'architecture du siège.

Lors d'un choc, les capteurs de détection envoient l'ordre de déclenchement du système de protection au calculateur. Le générateur pyrotechnique à trois chambres 30 enverra alors la quantité de gaz nécessaire dans le ou les poussoirs concernés grâce aux diffuseurs.

On a ainsi illustré aux figures 7 et 8 le déclenchement du poussoir latéral externe 22 par comparaison avec ce poussoir avant déclenchement illustré à la figure 6. Le poussoir ou module 22 se gonfle sous la pression du gaz, ce qui entraine la déformation de la matelassure d'assise et la prise en charge du bassin. Cette action permet de mettre en vitesse l'occupant en le déplaçant vers l'intérieur du véhicule au moyen d'un mouvement de rotation autour d'un axe de rotation X passant par le corps du passager et le dossier du siège, axe horizontale et parallèle à la direction de marche du véhicule. Cette action permet également de déployer plus rapidement le coussin gonflable latéral 14 en particulier s'il est volumineux.

Suivant les cas, le poussoir 22, 24 ou 26 pourra être formé d'une tôle pliée, d'un coussin gonflable ou d'une pièce en matière plastique déformable.

L'invention s'intègre sur les sièges conducteur et passager afin d'assurer une protection totale aux occupants pour les chocs frontaux et latéraux (droites ou gauches).

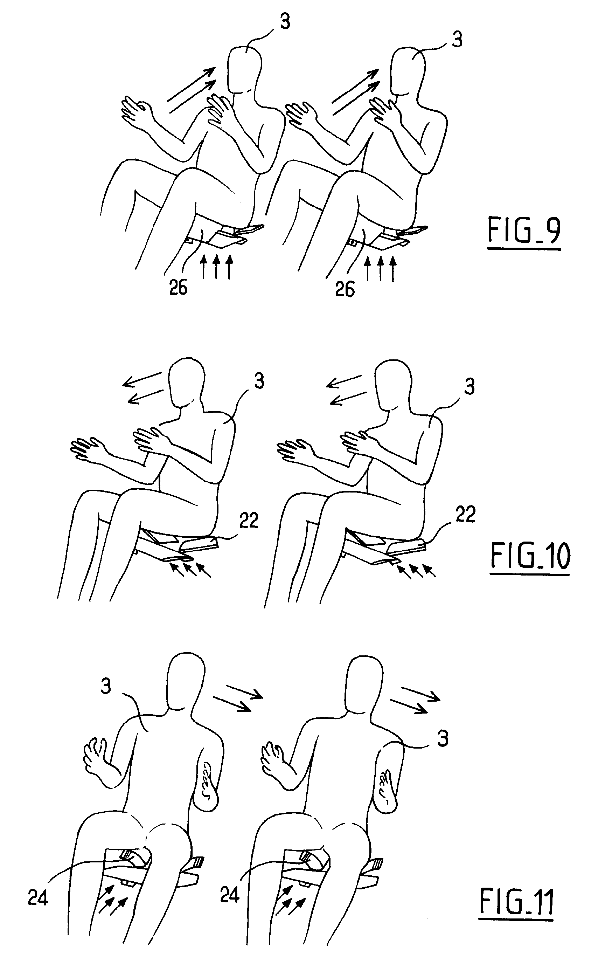

Ainsi, si l'occupant subit un choc frontal, le calculateur agit sur le générateur de gaz pour déclencher le poussoir 26 d'antisoumarinage et seulement ce dernier comme illustré à la figure 9.

Si un choc venant de la gauche du conducteur est détecté par le capteur de choc latéral correspondant, le générateur de gaz aura l'ordre de déployer le seul module gauche 22 aux figures 7, 8, et 10 afin de pousser le conducteur vers l'intérieur du véhicule comme illustré aux figures 9, 8 et 10.

En revanche, si le choc vient de la droite du conducteur comme sur la figure 11, le déclenchement du poussoir droit 24 dans son siège permettra d'éviter un éventuel contact de son corps avec celui du passager, contact qui peut engendrer un risque mortel notamment avec la tête. Ce déclenchement permettra aussi de l'éloigner du choc en le rapprochant de sa porte latérale.

L'invention permet donc de protéger les deux personnes occupant les sièges avant du véhicule dans leurs sièges respectifs en évitant les dommages collatéraux dus à leur collision. De plus, cette cinématique permet également de mettre en vitesse dans le même sens que le choc la personne la plus éloignée du choc et la personne la plus proche afin de réduire la force d'impact qui va s'appliquer sur elles lors du choc.

Un déclenchement simultané de deux des poussoirs (par exemple le poussoir d'antisoumarinage et l'un des poussoirs latéraux) est aussi possible en cas de choc en diagonale.

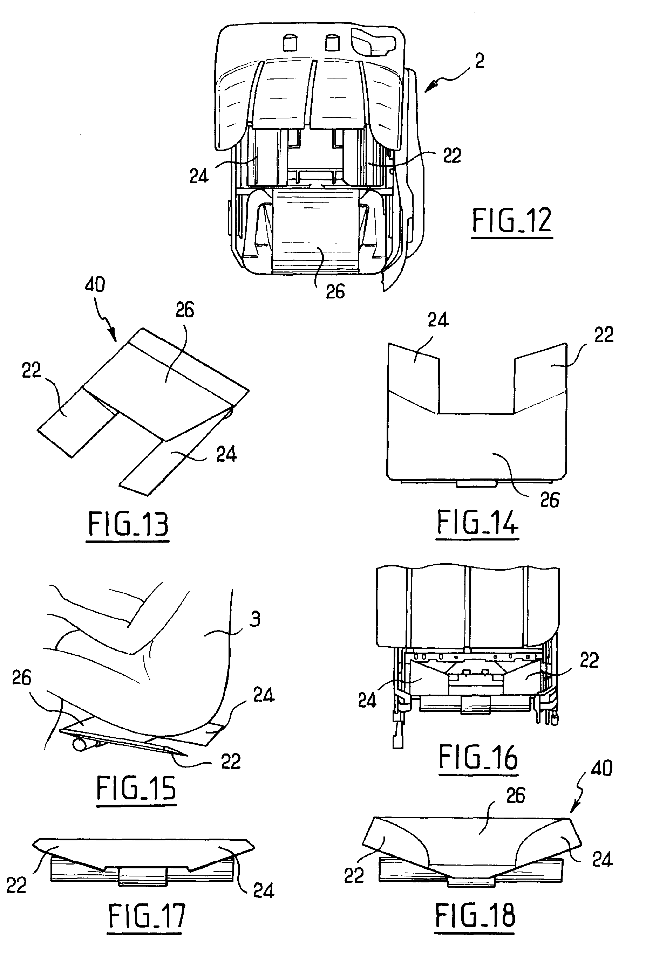

Par ailleurs, en cas de chocs combinés, le calculateur 29 pourra déclencher grâce au générateur 30 au moins deux des poussoirs successivement. Ainsi, un choc frontal peut entraîner par la suite le véhicule sur un choc latéral. Il faudra donc déclencher tout d'abord le poussoir d'antisoumarinage 26, puis déployer dans un deuxième temps le poussoir latéral approprié. Le déploiement de ces deux poussoirs a été illustré à la figure 12 dans le cas des poussoirs 24 et 26.

Différents types de conception des pièces formant les poussoirs sont envisageables.

On a ainsi illustré en référence aux figures 13 à 20 un mode de réalisation dans lequel les trois poussoirs sont constitués par une même pièce monobloc en « U » 40. Il s'agit d'une pièce en métal ou en matière plastique à laquelle est solidarisée le générateur central de gaz. Cette pièce s'intègre dans l'assise du siège conducteur ou passager comme illustré aux figures 15 et 16, l'ouverture du « U » étant dirigée vers l'arrière. Cette pièce comprend trois compartiments correspondant respectivement aux poussoirs latéraux et au poussoir d'antisoumarinage. Les poussoirs latéraux 22 et 24 forment les branches du « U » et le poussoir 26 en forme la base. On peut ainsi déployer l'une de ces zones ou plusieurs d'entre elles selon le type de choc.

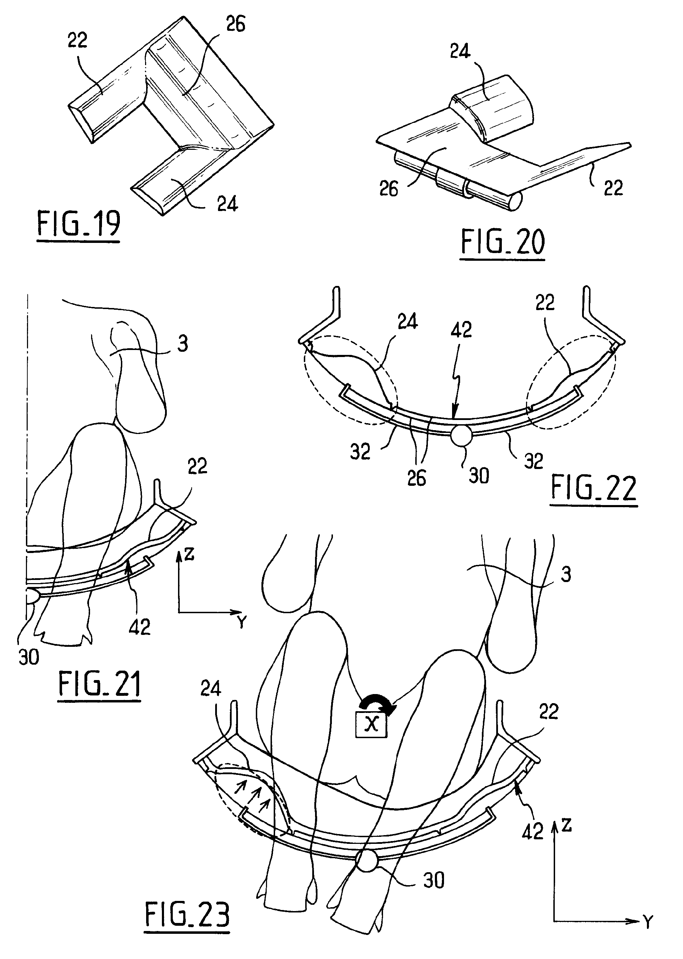

Différents cas de déploiement ont ainsi été illustrés aux figures 17 à 20. A la figure 17, la pièce est à l'état non déployée. A la figure 18 et 19, les trois compartiments de la pièce sont déployés, par exemple à l'issue de chocs combinés. A la figure 20, seul le poussoir latéral droit 24 est déployé.

En remplacement de la pièce en « U », il est possible de constituer les trois poussoirs ou au moins deux d'entre eux au moyen d'un double bac en tôle logé dans l'assise, et compartimenté dans les zones qui devront se déployer en cas de choc comme illustré aux figures 21 à 23. Ici encore, un générateur central à trois chambres est fixé sous le siège. Les différentes zones formant les poussoirs respectifs sont étanches afin de pouvoir être mises en pression sur commande du calculateur et d'agir sur l'occupant comme précédement décrit. C'est ainsi qu'on a illustré sur les figures le poussoir 22 à l'état non déployé et le poussoir latéral droit 24 à l'état déployé. Le double bac en tôle est par exemple formé de deux tôles 26 s'étendant localement en parallèle et à distance l'une de l'autre sauf à certaines zones où elles sont soudées l'une à l'autre pour délimiter les compartiments étanches. Les tôles seront suffisamment minces pour être déformables sous l'effet de la pression du gaz lors du déclenchement. Chacune des zones correspondant aux poussoirs sera reliée au générateur 30 par un conduit diffuseur 32.

La figure 23 illustre ainsi le déplacement du corps du passager avant sous l'effet du déclenchement du poussoir latéral 24. Ce déplacement se traduit par une rotation autour d'un axe X parallèle à la direction longitudinale du véhicule entraînant ainsi la partie supérieure de son corps 3 vers l'intérieur du véhicule. Naturellement, sous l'effet de ce déplacement, la matelassure de l'assise du siège se trouve compressée d'une part au niveau du poussoir déclenché 24 en raison de ce déclenchement et d'autre part au niveau du poussoir non déclenché 22 en raison de la rotation.

On voit donc que l'invention constitue ici un siège équipé d'une assise active constituée d'une bosse d'antisoumarinage active couplée à deux poussoirs obliques de bassin. Dans le cas d'une stratégie d'anticipation de crash, on déclenche des éléments pyrotechniques dans l'assise afin de prendre en charge l'occupant en vue de minimiser le choc. Les trois poussoirs sont susceptibles d'avoir une réaction complémentaire. Le calculateur active l'un des poussoirs ou plusieurs d'entre eux selon la nature du choc, à savoir frontal ou latéral. Ce déclenchement peut se faire sur deux des poussoirs simultanément ou successivement. Après détection du choc par les capteurs, le générateur envoie du gaz dans le ou les poussoirs concernés afin de les gonfler et d'entraîner une déformation de la matelassure pour une prise en charge rapide de l'occupant.

Les trois poussoirs bénéficiant ici du même générateur, on réduit l'encombrement du système.

Bien entendu, on pourra apporter à l'invention de nombreuses modifications sans sortir du cadre de celle-ci.

On pourra ainsi se dispenser de l'un des trois poussoirs, bien que cela soit moins avantageux.

## Revendications

1. Siège (2) de véhicule, **caractérisé en ce qu'**il comprend au moins deux poussoirs parmi les poussoirs suivants aptes à déplacer un occupant (3) du siège :
- un poussoir latéral (22) associé à un côté externe du siège ;
- un poussoir latéral (24) associé à un côté interne du siège ; et
- un poussoir d'antisoumarinage (26).

2. Siège selon la revendication précédente **caractérisé en ce qu'**il comprend les trois poussoirs.

3. Siège selon l'une quelconque des revendications précédentes **caractérisé en ce qu'**il comprend un organe de commande (29) agencé pour commander le déplacement de l'occupant (3) au moyen de l'un au moins des poussoirs (22, 24, 26).

4. Siège selon la revendication précédente **caractérisé en ce que** l'organe de commande (29) est agencé pour commander le déplacement de l'occupant au moyen :
- de l'un seulement des poussoirs ; ou
- de deux des poussoirs ou des deux poussoirs ;
en fonction d'au moins une caractéristique d'un événement concernant le véhicule.

5. Siège selon l'une quelconque des revendications 3 ou 4 **caractérisé en ce que** l'organe de commande (29) est agencé pour commander le déplacement de l'occupant au moyen simultanément du poussoir d'antisoumarinage (26) et du poussoir latéral ou de l'un des poussoirs latéraux (22, 24).

6. Siège selon l'une quelconque des revendications 3 à 5 **caractérisé en ce que** l'organe de commande (29) est agencé pour commander le déplacement de l'occupant au moyen successivement de deux des poussoirs ou des deux poussoirs.

7. Siège l'une quelconque des revendications précédentes **caractérisé en ce qu'**il comprend un dispositif (40 ; 42) comportant au moins deux des poussoirs.

8. Siège l'une quelconque des revendications précédentes **caractérisé en ce qu'**il comprend un dispositif (40) comportant les trois poussoirs.

9. Véhicule **caractérisé en ce qu'**il comprend au moins un siège (2) parmi un siège de conducteur, un siège de passager avant et un siège arrière conforme à l'une quelconque des revendications précédentes.

10. Procédé de protection d'un passager (3) d'un véhicule **caractérisé en ce qu'**on déplace le passager (3) sur son siège par rapport au reste du véhicule au moyen de deux poussoirs au moins parmi les suivants :
- un poussoir latéral (22) associé à un côté externe du siège ;
- un poussoir latéral (24) associé à un côté interne du siège ; et
- un poussoir d'antisoumarinage (26).
